# FASCICULE DE BREVET EUROPEEN

(11) **EP 2 599 663 B1**
(45) Date de publication et mention de la délivrance du brevet: **17.12.2014**
(21) Numéro de dépôt: 12194657.8
(22) Date de dépôt: 28.11.2012
(51) Int. Cl.: B60P 3/20, B62D 25/20

(54) **Caisse isotherme pour transport frigorifique**
Isolierbehälter für den Kühltransport
Isothermal box for refrigerated transport

(30) Priorité: 29.11.2011 FR 1160916
(43) Date de publication de la demande: 05.06.2013
(73) Titulaire: Lamberet, 01380 Saint Cyr sur Menthon (FR)
(72) Inventeur: Dugas, Frédéric, 01250 MONTAGNAT (FR); Tuet, Gwénaël, 01000 BOURG EN BRESSE (FR)
(74) Mandataire: Delorme, Nicolas

(56) Documents cités:
- US-A- 2 753 018
- US-A- 2 786 556
- US-A- 5 170 605

## Description

La présente invention concerne une caisse isotherme pour transport frigorifique.

Certains produits, notamment les produits alimentaires, doivent être transportés à des températures basses, par exemple de l'ordre de 0°C à 6°C, voire très basses, par exemple de l'ordre de -18°C. Ces températures doivent être maintenues constantes pour ne pas rompre la chaîne du froid. Des véhicules frigorifiques permettent de transporter des produits à ces températures basses ou très basses maintenues constantes, depuis un entrepôt de départ jusqu'à un entrepôt d'arrivée ou un lieu de distribution. Ces véhicules comprennent notamment une caisse isotherme munies de panneaux isolants formant notamment un plancher, une paroi supérieure et des parois latérales, et délimitant une ouverture par laquelle peuvent être chargés ou déchargés les produits à transporter.

Le plancher des caisses isothermes est traditionnellement recouvert d'une tôle avec des motifs par exemple en damier ou bien d'un revêtement polyester avec une intégration de corindon pour assurer une certaine adhérence et rigidité du plancher. Cependant, ces tôles sont source de bruit, généré notamment au cours du chargement ou du déchargement du véhicule frigorifique lorsque des chariots de manutention roulent sur le plancher de la caisse isotherme. De plus, lorsque le plancher de la caisse isotherme est recouvert par une tôle, celle-ci est classiquement soudée au niveau de ses bordures aux parois latérales de la caisse isotherme. Il en résulte une transmission des vibrations de la tôle aux parois latérales de la caisse isotherme qui provoque un effet de résonance. Enfin, lorsque le plancher de la caisse isotherme est recouvert d'un revêtement polyester avec une intégration de corindon, les grains de corindon engendrent des vibrations au niveau des chariots de manutention roulant sur ce revêtement.

Le bruit ainsi généré, qui peut atteindre plus de 70 décibels (dB), est particulièrement gênant lors de livraisons en ville, où certaines réglementations imposent un seuil maximal de 60 dB aux nuisances sonores.

Il est connu de limiter le bruit généré par le roulement de chariots de manutention sur le plancher de la caisse isotherme en utilisant un revêtement en polyuréthane. Ce revêtement en polyuréthane absorbe relativement efficacement les bruits. Toutefois, compte-tenu du roulement répété des chariots de manutention, ce revêtement en polyuréthane tend à s'user rapidement, et perd donc de son intérêt.

II est notamment connu du document de brevet US 2 753 018 un ensemble de plancher métallique formé de panneaux en métal extrudé pourvus de moyens d'encastrement, agencés de manière contiguë.

Il est par ailleurs connu du document de brevet US 5 170 605 une construction de plancher de remorque frigorifique.

Il est également connu du document de brevet US 2 786 556 des éléments extrudés pour plancher de remorque de camion formant une caisse selon le préambule de la revendication 1.

Aussi la présente invention vise à pallier tout ou partie de ces inconvénients en proposant une caisse isotherme pour transport frigorifique, offrant une isolation phonique efficace au cours de son chargement ou de son déchargement.

A cet effet, la présente invention a pour objet une caisse isotherme pour transport frigorifique selon la revendication 1.

Ainsi, la caisse isotherme selon l'invention permet de piéger dans les cavités des lames le bruit généré par le roulement de chariots de manutention sur les lames. De plus, les vibrations générées par ce roulement sont sensiblement atténuées par l'organe de découplage phonique, ce qui permet d'éviter leur transmission, donc la création d'un phénomène de résonance, aux plinthes périphériques et aux parois latérales contre lesquelles elles sont adossées.

Selon une caractéristique de la caisse isotherme selon l'invention, chaque cavité s'étend de manière sensiblement longitudinale en direction de l'ouverture destinée au chargement et au déchargement du ou des produits et débouche contre un seuil.

De manière avantageuse, chaque lame est conformée pour s'emboîter avec au moins une autre lame.

Selon un mode de réalisation, chaque plinthe périphérique comprend un profilé en L présentant une aile horizontale destinée à venir en appui contre le plancher et contre l'organe de découplage phonique, et une aile verticale destinée à venir en appui contre l'une des parois latérales de la caisse isotherme.

Ainsi, les plinthes périphériques protègent la jonction entre les parois latérales et le plancher, contribuent à la rigidité de ce dernier, mais ne transmettent pas les vibrations des lames aux parois latérales, car ces vibrations sont absorbées par l'organe de découplage acoustique.

Selon une autre caractéristique de la caisse isotherme selon l'invention, chaque lame comprend une face supérieure munie d'une pluralité de rainures longitudinales.

Ces rainures offrent l'avantage d'une meilleure adhérence et forment des canaux favorisant l'écoulement des eaux de nettoyage.

Avantageusement, chaque rainure longitudinale s'étend de manière rectiligne en direction de l'ouverture destinée au chargement et au déchargement de la caisse isotherme et débouche dans cette ouverture.

Ainsi, les rainures permettent d'évacuer directement et rapidement les eaux de nettoyage hors de la caisse isotherme, via l'ouverture destinée au chargement ou déchargement des produits.

Selon une possibilité, l'organe de découplage phonique est un joint d'isolation phonique interposé entre l'ensemble formé par les lames et chaque plinthe périphérique.

Selon un mode de réalisation, les lames sont collées au plancher.

De manière alternative, les lames sont posées sur le panneau isolant formant plancher.

Cela permet de limiter la transmission de vibrations au plancher, donc de limiter la création d'un phénomène de résonance.

Selon une autre caractéristique de la caisse isotherme selon l'invention, chaque lame est en métal extrudé.

Cette caractéristique présente l'avantage d'offrir des lames résistant à l'usure due au roulement répété de chariots de manutention.

D'autres caractéristiques et avantages de la présente invention ressortiront clairement de la description ci-après d'un mode de réalisation de la présente invention, donné à titre d'exemple non limitatif, en référence aux dessins annexés dans lesquels :
- La figure 1 est une vue en perspective d'une caisse isotherme selon un mode de réalisation de l'invention,
- La figure 2 est une vue en perspective d'une lame destinée à équiper une caisse isotherme selon un mode de réalisation de l'invention,
- La figure 3 est une vue en coupe d'une partie du plancher d'une caisse isotherme selon un mode de réalisation de l'invention,
- La figure 4 est une vue en perspective éclatée d'une partie d'une caisse isotherme selon un mode de réalisation de l'invention,
- La figure 5 est une vue d'une partie d'une caisse isotherme selon un mode de réalisation de l'invention.

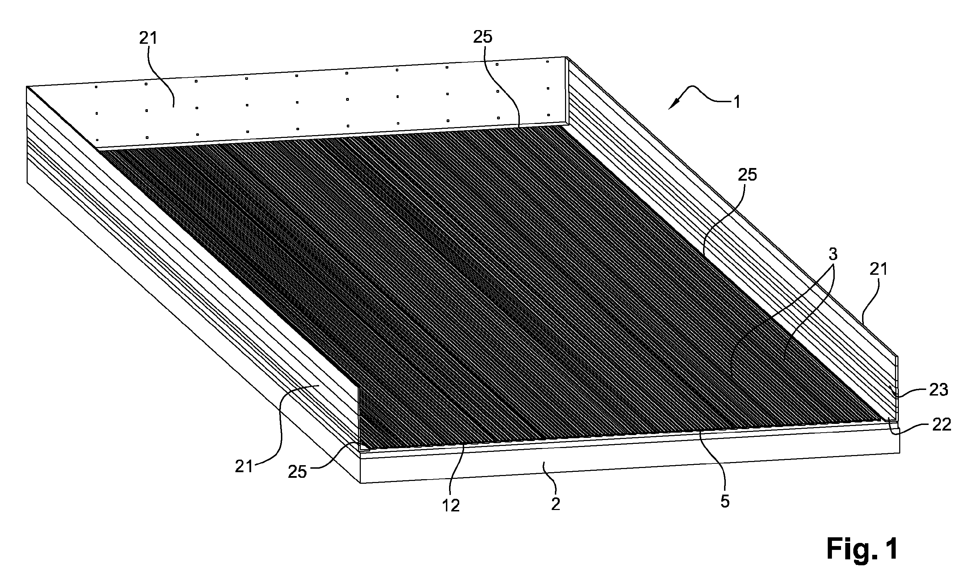

La figure 1 montre une partie d'une caisse 1 isotherme selon un mode particulier de réalisation de l'invention. La caisse 1 isotherme comprend une pluralité de panneaux thermiquement isolants formant un plancher 2, une paroi supérieure (non représentée) et des parois latérales 6.

Le plancher 2, la paroi supérieure et les parois latérales 6 reliant le plancher 2 et la paroi supérieure délimitent une ouverture destinée au chargement et au déchargement de la caisse 1 isotherme. Cette ouverture peut être obturée par des panneaux thermiquement isolants formant des portes arrière d'un véhicule frigorifique.

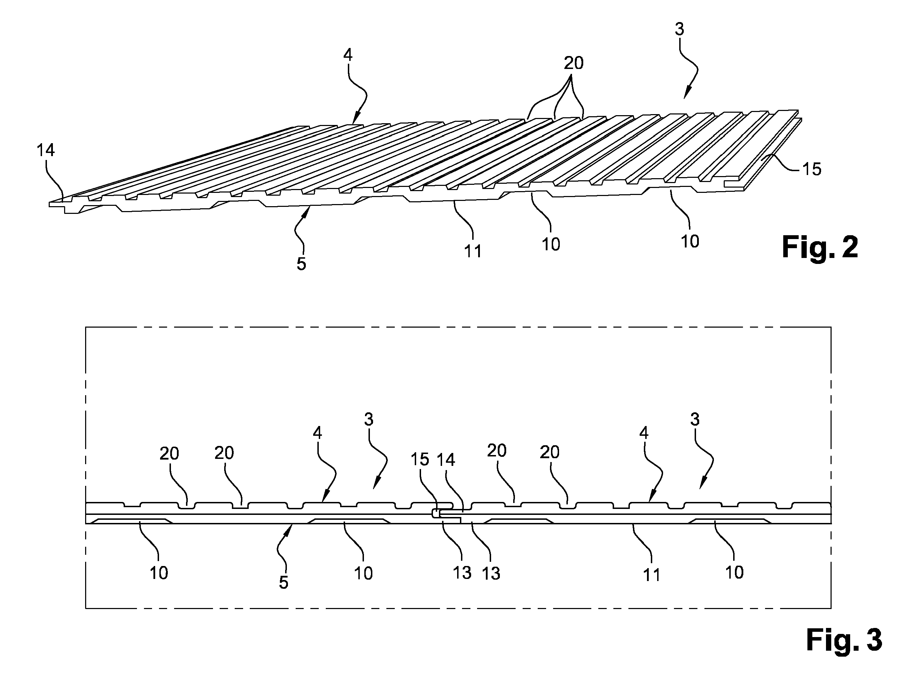

Le plancher 2 comprend des moyens d'isolation phonique, destinés à réduire sensiblement le bruit généré par le roulement d'un chariot de manutention sur le plancher 2. Les moyens d'isolation phonique comprennent au moins une lame 3, visible sur la figure 2. Dans l'exemple de la figure 1, les moyens d'isolation phonique comprennent une pluralité de lames 3 juxtaposées.

Comme cela est représenté sur la figure 3, chaque lame 3 comprend une face supérieure 4 et une face inférieure 5. La face inférieure 5 est destinée à venir en appui contre le plancher 2. La face inférieure 5 comprend au moins une cavité 10 ou évidement destiné à piéger le bruit généré lorsqu'un chariot de manutention roule sur la face supérieure 4.

Elle comprend aussi des surfaces de contact 11 destinées à venir en appui contre le plancher 2. Les lames 3 peuvent être posées sur le plancher 2. De manière alternative, les lames 3 peuvent être collées au plancher 2, au niveau des surfaces de contact 11. La colle utilisée peut être une colle polyuréthane.

Les lames 3 peuvent être en métal extrudé, par exemple en aluminium.

Selon le mode de réalisation illustré à la figure 3, les cavités 10 s'étendent de manière sensiblement longitudinale et parallèle. Elles peuvent déboucher contre un seuil 16 qui vient se positionner contre une bordure d'extrémité 12 de l'ensemble formé par l'assemblage des lames 3, au niveau de l'ouverture destinée au chargement ou déchargement de la caisse 1 isotherme.

Les lames 3 sont avantageusement conformées pour s'emboîter les unes aux autres. Elles comprennent ainsi, au niveau de leurs bordures latérales 13, un système d'emboîture. Ce système d'emboîture peut être du type tenon et mortaise. Ainsi, l'un des bords latéraux 13 de chaque lame 3 comprend un élément en saillie formant tenon 14 et l'autre bord latéral 13 de chaque lame 3 comprend un logement 15 de réception formant mortaise adapté pour recevoir de manière complémentaire le tenon 14 d'une lame 3 distincte. L'emboîtement des lames 3 entre elles est avantageusement étanche. L'étanchéité de la jonction est par exemple obtenue par un mastic d'étanchéité de type polyuréthane qui est inséré avant emboîtement dans le logement 15 de réception formant la mortaise.

La face supérieure 4 de chaque lame 3 peut comporter, comme cela est visible sur la figure 2 ou la figure 3, une pluralité de rainures 20 longitudinales. Les rainures 20 sont ici parallèles. Elles s'étendent en direction de l'ouverture destinée au chargement et déchargement de la caisse 1 isotherme. Elles débouchent avantageusement au niveau de cette ouverture pour permettre l'évacuation des eaux de nettoyage. Lorsqu'un seuil 16 est fixé contre la bordure d'extrémité 12 de l'ensemble formé par les lames 3, les rainures 20 débouchent au-dessus de ce seuil 16 pour permettre l'écoulement des eaux de nettoyage par-dessus ce dernier.

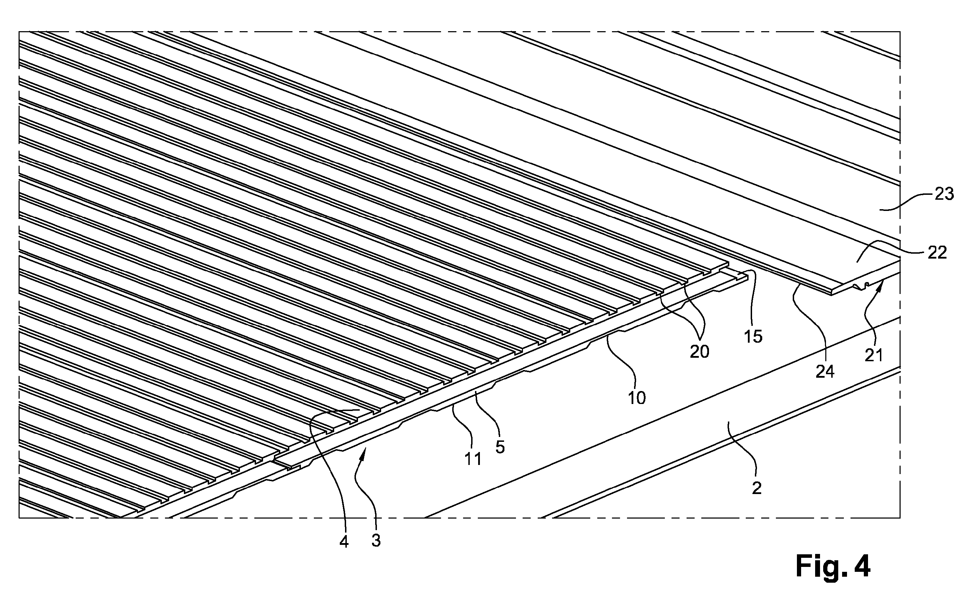

La caisse 1 isotherme comprend également au moins une plinthe 21 périphérique, comme cela est visible sur la figure 4. Chaque plinthe 21 périphérique peut correspondre à un profilé sensiblement en forme de L, avec une aile horizontale 22 et une aile verticale 23.

Dans le mode de réalisation de la figure 1, la caisse 1 isotherme comprend trois plinthes 21 périphériques s'adossant aux trois parois latérales de la caisse 1 isotherme.

L'aile horizontale 22 est destinée à venir en appui contre le plancher 2. L'aile verticale 23 est destinée à venir en appui contre l'une des parois latérales 6. L'aile horizontale 22 présente une bordure périphérique 24, visible sur la figure 4.

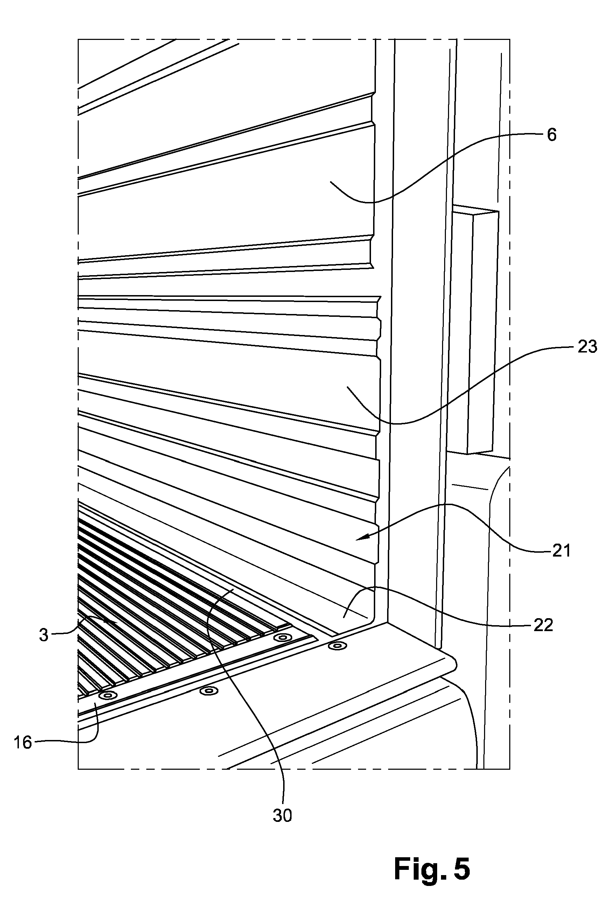

Comme cela est visible sur la figure 5, un organe de découplage phonique, par exemple un joint 30 d'isolation phonique, est interposé entre le bord latéral 13 de l'une des lames 3, correspondant à un bord latéral 25 de l'ensemble formé par l'assemblage des lames 3, et le bord périphérique 24 de l'aile horizontale 22. En d'autres termes, l'ensemble formé par les lames 3 juxtaposées est relié à chaque plinthe 21 périphérique par le joint 30 d'isolation phonique.

Bien entendu, l'invention n'est nullement limitée au mode de réalisation décrit ci-dessus, ce mode de réalisation n'ayant été donné qu'à titre d'exemple. Des modifications restent possibles, notamment du point de vue de la constitution des divers éléments ou par la substitution d'équivalents techniques, sans pour autant sortir du champ de protection de l'invention.

Ainsi, chaque lame 3 peut être constituée de deux pièces distinctes destinées à être solidarisées, par exemple une pièce comprenant la face supérieure 4 et une pièce comprenant la face inférieure 5.

## Revendications

1. Caisse (1) isotherme pour transport frigorifique comprenant une pluralité de panneaux thermiquement isolants formant plancher (2), parois latérales (6) et paroi supérieure, et délimitant une ouverture destinée au chargement et au déchargement de la caisse (1) isotherme, l'ouverture étant destinée à être obturée par des panneaux isolants formant portes arrières d'un véhicule, le plancher (2) présentant des moyens d'isolation phonique formés par une pluralité de lames (3) juxtaposées dont une face inférieure (5), destinée à venir en appui contre le plancher (2), comprend au moins une cavité (10) destinée à piéger des ondes acoustiques, les lames (3) juxtaposées formant un ensemble relié à au moins une plinthe (21) périphérique, **caractérisée en ce que** l'ensemble est relié à chaque plinthe (21) périphérique par l'intermédiaire d'un organe de découplage phonique atténuant la transmission des ondes sonores entre les lames (3) et chaque plinthe (21) périphérique.

2. Caisse (1) isotherme selon la revendication 1, **caractérisée en ce que** chaque cavité (10) s'étend de manière sensiblement longitudinale en direction de l'ouverture destinée au chargement et au déchargement du ou des produits et débouche contre un seuil (16).

3. Caisse (1) isotherme selon la revendication 1 ou 2, **caractérisée en ce que** chaque lame (3) est conformée pour s'emboîter avec au moins une autre lame (3).

4. Caisse (1) isotherme selon l'une des revendications 1 à 3, **caractérisée en ce que** chaque plinthe (21) périphérique comprend un profilé en L présentant une aile horizontale (22) destinée à venir en appui contre le plancher (2) et contre l'organe de découplage phonique, et une aile verticale (23) destinée à venir en appui contre l'une des parois latérales (6) de la caisse (1) isotherme.

5. Caisse (1) isotherme selon l'une des revendications 1 à 4, **caractérisée en ce que** chaque lame (3) comprend une face supérieure (4) munie d'une pluralité de rainures (20) longitudinales.

6. Caisse (1) isotherme selon la revendication 5, **caractérisée en ce que** chaque rainure (20) longitudinale s'étend de manière rectiligne en direction de l'ouverture destinée au chargement et au déchargement de la caisse (1) isotherme et débouche dans cette ouverture.

7. Caisse (1) isotherme selon l'une des revendications 1 à 6, **caractérisée en ce que** l'organe de découplage phonique est un joint (30) d'isolation phonique interposé entre l'ensemble formé par les lames (3) et chaque plinthe (21) périphérique.

8. Caisse (1) isotherme selon l'une des revendications 1 à 7, **caractérisée en ce que** les lames (3) sont posées sur le panneau isolant formant plancher (2).

9. Caisse (1) isotherme selon l'une des revendications 1 à 7, **caractérisé en ce que** les lames (3) sont collées au plancher (2).

10. Caisse (1) isotherme selon l'une des revendications 1 à 9, **caractérisée en ce que** chaque lame (3) est en métal extrudé.

## Patentansprüche

1. Isolierbehälter (1) für den Kühltransport, umfassend eine Vielzahl von thermisch isolierenden Platten, die einen Boden (2), seitliche Wände (6) und eine obere Wand bilden und eine Öffnung begrenzen, die ausgelegt ist, um den Isolierbehälter (1) zu beladen und zu entladen, wobei die Öffnung ausgelegt ist, um von Isolierplatten verschlossen zu werden, die hintere Türen eines Fahrzeugs bilden, wobei der Boden (2) Mittel zur Schallisolierung aufweist, die durch eine Vielzahl von nebeneinander gesetzten Lamellen (3) gebildet sind, wobei eine innere Fläche (5), die ausgelegt ist, um gegen den Boden (2) aufzuliegen, mindestens einen Hohlraum (10) umfasst, der ausgelegt ist, um akustische Wellen einzufangen, wobei die nebeneinander gesetzten Lamellen (3) eine Einheit bilden, die mindestens mit einem Umgebungssockel (21) verbunden ist, **dadurch gekennzeichnet, dass** die Einheit mit jedem Umgebungssockel (21) mit Hilfe eines Organs zur Schallentkopplung verbunden ist, die die Übertragung der Schallwellen zwischen den Lamellen (3) und jeder Umgebungssockelleiste (21) dämpft.

2. Isolierbehälter (1) nach Anspruch 1, **dadurch gekennzeichnet, dass** sich jeder Hohlraum (10) auf im Wesentlichen längs gerichtete Weise in Richtung der Öffnung erstreckt, die für die Ladung und die Entladung des oder der Produkte ausgelegt ist und gegen den Boden (16) mündet.

3. Isolierbehälter (1) nach Anspruch 1 oder 2, **dadurch gekennzeichnet, dass** jede Lamelle (3) gebildet ist, um sich in mindestens eine weiteres Lamelle (3) einzuschieben.

4. Isolierbehälter (1) nach einem der Ansprüche 1 bis 3, **dadurch gekennzeichnet, dass** jeder Umgebungssockel (21) ein L-förmiges Profil umfasst, das einen horizontalen Flügel (22) aufweist, der ausgelegt ist, um gegen den Boden (2) und gegen das Organ zur Schallentkopplung aufzuliegen, und einen vertikalen Flügel (23), der ausgelegt ist, um gegen eine der seitlichen Wände (6) des Isolierbehälters (1) aufzuliegen.

5. Isolierbehälter (1) nach einem der Ansprüche 1 bis 4, **dadurch gekennzeichnet, dass** jede Lamelle (3) eine obere Fläche (4) umfasst, die mit einer Vielzahl längs gerichteten Kerben (20) ausgestattet ist.

6. Isolierbehälter (1) nach Anspruch 5, **dadurch gekennzeichnet, dass** sich jede längs gerichtete Kerbe (20) auf geradlinige Weise in Richtung der Öffnung erstreckt, die ausgelegt ist, um den Isolierbehälter (1) zu beladen und zu entladen, und in diese Öffnung mündet.

7. Isolierbehälter (1) nach einem der Ansprüche 1 bis 6, **dadurch gekennzeichnet, dass** das Organ zur Schallentkopplung eine Verbindung (30) zur Schallisolierung ist, die zwischen der Einheit, die von den Lamellen (3) gebildet ist, und jedem Umgebungssockel (21) gebildet ist.

8. Isolierbehälter (1) nach einem der Ansprüche 1 bis 7, **dadurch gekennzeichnet, dass** die Lamellen (3) auf die isolierende Platte gestellt sind, die den Boden (2) bildet.

9. Isolierbehälter (1) nach einem der Ansprüche 1 bis 7, **dadurch gekennzeichnet, dass** die Lamellen (3) auf den Boden (2) geklebt sind.

10. Isolierbehälter (1) nach einem der Ansprüche 1 bis 9, **dadurch gekennzeichnet, dass** jede Lamelle (3) aus extrudiertem Metall besteht.

## Claims

1. An isothermal box (1) for refrigerated transport comprising a plurality of thermally insulating panels forming floor (2), side walls (6) and upper wall, and delimiting an opening intended for the loading and unloading of the isothermal box (1), the opening being intended to be obturated by insulating panels forming rear doors of a vehicle, the floor (2) comprising sound insulation means formed by a plurality of juxtaposed blades (3) a lower face (5) of which, intended to bear against the floor (2), comprises at least one cavity (10) intended to trap acoustic waves, the juxtaposed blades (3) forming an assembly connected to at least one peripheral baseboard (21), **characterized in that** the assembly is connected to each peripheral baseboard (21) via a phonic decoupling member attenuating the transmission of sound waves between the blades (3) and each peripheral baseboard (21).

2. The isothermal box (1) according to claim 1, **characterized in that** each cavity (10) extends in a substantially longitudinal manner toward the opening intended for the loading and unloading of the product(s) and opens out a sill (16).

3. The isothermal box (1) according to claim 1 or 2, **characterized in that** each blade (3) is shaped to nest with at least one other blade (3).

4. The isothermal box (1) according to any of claim 1 to 3, **characterized in that** each peripheral baseboard (21) comprises an L-shaped profile comprising a horizontal flange (22) intended to bear against the floor (2) and against the phonic decoupling member, and a vertical flange (23) intended to bear against one of the side walls (6) of the isothermal box (1).

5. The isothermal box (1) according to any of claim 1 to 4, **characterized in that** each blade (3) comprises an upper face (4) provided with a plurality of longitudinal grooves (20).

6. The isothermal box (1) according to claim 5, **characterized in that** each longitudinal groove (20) extends in a rectilinear manner toward the opening intended for the loading and unloading of the isothermal box (1) and opens into this opening.

7. The isothermal box (1) according to any of claim 1 to 6, **characterized in that** the phonic decoupling member is a sound insulating seal (30) interposed between the assembly formed by the blades (3) and each peripheral baseboard (21).

8. The isothermal box (1) according to any of claim 1 to 7, **characterized in that** the blades (3) are laid on the insulating panel forming the floor (2).

9. The isothermal box (1) according to any of claim 1 to 7, **characterized in that** the blades (3) are bonded to the floor (2).

10. The isothermal box (1) according to any of claim 1 to 9, **characterized in that** each blade (3) is made of extruded metal.
